# EUROPEAN PATENT APPLICATION

(11) **EP 4 653 343 A1**
(43) Date of publication of application: **26.11.2025**
(21) Application number: 23917694.4
(22) Date of filing: 12.12.2023
(51) Int. Cl.: B65G 1/00, G05B 19/418

(54) **AUTOMATIC MACHINE AND CONTROL METHOD FOR AUTOMATIC MACHINE**

(30) Priority: 16.01.2023 JP 2023004400
(71) Applicant: Amada Co., Ltd., Isehara-shi, Kanagawa 259-1196 (JP)
(72) Inventor: OTAHARA Riku, Isehara-shi, Kanagawa 259-1196 (JP)
(74) Representative: Grünecker Patent- und Rechtsanwälte PartG mbB
(86) International application number: PCT/JP2023/044371
(87) International publication number: WO 2024/154483

(57) **Abstract**

A shutter (6) is provided in a protective fence (10) of an automatic machine (100) surrounded by the protective fence (10) and opens and closes an entrance for a conveyor car to enter for conveying an item to be conveyed. A sensor (laser scanner (7)) is provided in the vicinity of the shutter (6) and detects an object entering a monitoring region set to the entrance when the shutter (6) is opened. A control device (1) controls a shutter drive unit to open the shutter (6) when the conveyor car enters an area within the protective fence (10) and exits the area via the protective fence (10) and controls the automatic machine (100) to stop an operation of the automatic machine (100) when the sensor detects the object entering the monitoring region while the shutter (6) is opened.

## Description

### [TECHNICAL FIELD]

The present disclosure relates to an automatic machine and a control method for an automatic machine.

### [BACKGROUND ART]

In a processing process of processing a workpiece such as a sheet metal with a machine tool, or in a related process related to the process of processing the workpiece with the machine tool, an unmanned continuous operation using an automatic machine may be performed. The processing process includes, for example, a process of cutting the workpiece with a laser processing machine and a process of bending the workpiece with a bending machine, and the related process includes, for example, bringing in and bringing out processes of bringing the workpiece into the machine tool and bringing out the processed workpiece. The automatic machine that performs the unmanned continuous operation is surrounded by a protective fence to prevent a person from approaching the automatic machine inadvertently.

### [Citation List]

### [Patent Literature]

[Patent Literature 1] Japanese Unexamined Patent Application Publication No. 2003-294856

### [SUMMARY OF INVENTION]

An unmanned conveyor car may be used to bring a workpiece as an item to be conveyed into an automatic machine or to bring the workpiece as the item to be conveyed out of the automatic machine. For the conveyor car to enter an area within the protective fence, it is necessary to provide an entrance for the conveyor car to enter the area within the protective fence. To prevent a person from entering the area within the protective fence through the entrance, it is considered to provide a shutter at the entrance and open the shutter when the conveyor car enters the area within the protective fence or exits the area via the protective fence. However, when the shutter is opened for the conveyor car to pass through the entrance, it is not possible to eliminate the possibility of a person entering the area within the protective fence. If the person enters the area within the protective fence, the safety of the automatic machine is affected.

Not only when the person enters the area within the protective fence, but also, for example, if a conveyor car wrongly loaded with articles unrelated to the conveyance of the item to be conveyed enters the area within the protective fence, the safety of the automatic machine is affected. An automatic machine and a control method for an automatic machine are required to be capable of ensuring safety even if any object such as a person who is not assumed to enter the area within the protective fence or an article that is not assumed to be loaded on the conveyor car enters the area within the protective fence through an entrance for the conveyor car. The safety device described in Patent Literature 1 cannot meet the requirement.

A first aspect of one or more embodiments provides an automatic machine including a shutter provided in a protective fence of the automatic machine surrounded by the protective fence, the shutter being configured to open and close an entrance for a conveyor car to enter for conveying an item to be conveyed which is a component or a product; a shutter drive unit configured to drive the shutter to open and close the entrance; a sensor provided in the vicinity of the shutter, and configured to detect an object entering a monitoring region set to the entrance when the shutter is opened; and a control device configured to control the shutter drive unit to open the shutter when the conveyor car enters an area within the protective fence and exits the area via the protective fence, and to control the automatic machine to stop an operation of the automatic machine when the sensor detects the object entering the monitoring region while the shutter is opened.

According to the first aspect of one or more embodiments, the sensor detects the object entering via the monitoring region set to the entrance, so that when the object attempts to enter the area within the protective fence through the entrance, the machine is stopped, making it possible to ensure the safety of the automatic machine.

A second aspect of one or more embodiments provides a control method for an automatic machine, including: receiving, by a wireless communication unit provided in the automatic machine surrounded by a protective fence, a request to open a shutter, transmitted from a conveyor car configured to convey an item to be conveyed which is a component or a product, the shutter being provided in the protective fence and configured to open and close an entrance for the conveyor car to enter; upon receiving, by the wireless communication unit, the request to open the shutter, setting, by a sensor provided in the vicinity of the shutter, a monitoring region at the entrance to detect entry of an object into an area within the protective fence, and starting monitoring whether the object enters the monitoring region; in a state of monitoring whether the object enters the monitoring region, controlling, by a control device provided in the automatic machine, a shutter drive unit to open the shutter, the control device continuing an operation of the automatic machine when the sensor does not detect the entry of the object into the monitoring region, and stopping the operation of the automatic machine when the sensor detects the entry of the object into the monitoring region; receiving, by the wireless communication unit, a request to close the shutter, transmitted from the conveyor car that has entered the area within the protective fence; upon receiving, by the wireless communication unit, the request to close the shutter, controlling, by the control device, the shutter drive unit to close the shutter; and stopping the monitoring by the sensor on whether the object enters the monitoring region, after the shutter is closed.

According to the second aspect of one or more embodiments, since the sensor detects the object entering via the monitoring region set to the entrance while the shutter begins to open and close completely, the machine is stopped when the object attempts to enter the area within the protective fence through the entrance, making it possible to ensure the safety of the automatic machine.

In accordance with an automatic machine and a control method for an automatic machine according to one or more embodiments, safety can be ensured even if an object enters an area within the protective fence through an entrance for a conveyor car.

### [BRIEF DESCRIPTION OF DRAWINGS]

[FIG. 1] FIG. 1 is a block diagram illustrating an automatic machine according to one or more embodiments and an autonomous travel conveyance robot that cooperates with the automatic machine.
[FIG. 2] FIG. 2 is an external perspective view illustrating an automatic machine according to one or more embodiments.
[FIG. 3] FIG. 3 is a partially enlarged perspective view of FIG. 2.
[FIG. 4] FIG. 4 is a block diagram illustrating a specific configuration example of a laser scanner provided in the automatic machine according to one or more embodiments.
[FIG. 5A] FIG. 5A is a sequence diagram illustrating a process performed by the automatic machine and the autonomous travel conveyance robot that cooperate with each other, according to one or more embodiments.
[FIG. 5B] FIG. 5B is a sequence diagram illustrating a process that follows FIG. 5A.
[FIG. 5C] FIG. 5C is a sequence diagram illustrating a process that follows FIG. 5B.
[FIG. 5D] FIG. 5D is a sequence diagram illustrating a process that follows FIG. 5C.
[FIG. 6A] FIG. 6A illustrates an example of a monitoring range when the autonomous travel conveyance robot is loaded with a pallet.
[FIG. 6B] FIG. 6B illustrates an example of the monitoring range when the autonomous travel conveyance robot is unloaded.
[FIG. 6C] FIG. 6C illustrates an example of the monitoring range when the autonomous travel conveyance robot is loaded with the pallet, and a load amount of a product loaded on the pallet is small.
[FIG. 6D] FIG. 6D illustrates an example of the monitoring range when the autonomous travel conveyance robot is loaded with the pallet, and the load amount of the product loaded on the pallet is large.
[FIG. 6E] FIG. 6E illustrates an example of the monitoring range when the autonomous travel conveyance robot is loaded with the pallet, and the product is loaded only in a partial region on the pallet.
[FIG. 7A] FIG. 7A is a perspective view illustrating that the autonomous travel conveyance robot is loaded with the pallet and travels to a platform within the automatic machine.
[FIG. 7B] FIG. 7B is a perspective view illustrating that the autonomous travel conveyance robot moves under the platform.
[FIG. 7C] FIG. 7C is a perspective view illustrating that the autonomous travel conveyance robot that has placed the pallet on the platform travels toward a shutter.
[FIG. 8A] FIG. 8A is a perspective view illustrating that the automatic machine is loaded with the product on the pallet.
[FIG. 8B] FIG. 8B is a perspective view illustrating that the autonomous travel conveyance robot travels to the platform on which the pallet loaded with the product is placed.
[FIG. 8C] FIG. 8C is a perspective view illustrating that the autonomous travel conveyance robot has moved under the platform on which the pallet loaded with the product is placed.
[FIG. 8D] FIG. 8D is a perspective view illustrating that the autonomous travel conveyance robot loaded with the pallet loaded with the product travels toward the shutter.
[FIG. 9] FIG. 9 is a flowchart illustrating control of an operation of the automatic machine that is executed based on monitoring by a laser scanner.
[FIG. 10] FIG. 10 is a view for explaining a way to set a monitoring region capable of further ensuring safety.
[FIG. 11A] FIG. 11A is a view illustrating an undesirable timing to lower the shutter when the autonomous travel conveyance robot enters the automatic machine.
[FIG. 11B] FIG. 11B is a view illustrating a preferable timing to lower the shutter when the autonomous travel conveyance robot enters the automatic machine.
[FIG. 12] FIG. 12 is a diagram illustrating a safety light curtain that may be provided in place of a laser scanner in the automatic machine according to one or more embodiments.
[FIG. 13] FIG. 13 is a block diagram conceptually illustrating various examples of automatic machines.

### [DESCRIPTION OF EMBODIMENTS]

An automatic machine according to one or more embodiments includes a shutter, a shutter drive unit, a sensor, and a control device. The shutter is provided in a protective fence of the automatic machine surrounded by the protective fence, and configured to open and close an entrance for a conveyor car to enter for conveying an item to be conveyed which is a component or a product. The shutter drive unit is configured to drive the shutter to open and close the entrance. The sensor is provided in the vicinity of the shutter and configured to detect an object entering a monitoring region set to the entrance when the shutter is opened. The control device is configured to control the shutter drive unit to open the shutter when the conveyor car enters an area within the protective fence and exits the area via the protective fence, and to control the automatic machine to stop an operation of the automatic machine when the sensor detects the object entering the monitoring region while the shutter is opened.

A control method for an automatic machine according to one or more embodiments includes receiving, by a wireless communication unit provided in the automatic machine surrounded by a protective fence, a request to open a shutter, transmitted from a conveyor car configured to convey an item to be conveyed which is a component or a product, the shutter being provided in the protective fence and configured to open and close an entrance for the conveyor car to enter. The control method for the automatic machine according to one or more embodiments further includes, upon receiving, by the wireless communication unit, the request to open the shutter, setting, by a sensor provided in the vicinity of the shutter, a monitoring region at the entrance to detect entry of an object into an area within the protective fence, and starting monitoring whether the object enters the monitoring region. The control method for the automatic machine according to one or more embodiments further includes, in a state of monitoring whether the object enters the monitoring region, controlling, by a control device provided in the automatic machine, a shutter drive unit to open the shutter.

In the control method for the automatic machine according to one or more embodiments, the control device continues an operation of the automatic machine when the sensor does not detect the entry of the object into the monitoring region, and stops the operation of the automatic machine when the sensor detects the entry of the object into the monitoring region. The control method for the automatic machine according to one or more embodiments further includes receiving, by the wireless communication unit, a request to close the shutter, transmitted from the conveyor car that has entered the area within the protective fence. The control method for the automatic machine according to one or more embodiments further includes, upon receiving, by the wireless communication unit, the request to close the shutter, controlling, by the control device, the shutter drive unit to close the shutter. The control method for the automatic machine according to one or more embodiments further includes stopping the monitoring by the sensor on whether the object enters the monitoring region after the shutter is closed.

The automatic machine and the control method for the automatic machine according to one or more embodiments will be specifically described below with reference to the accompanying drawings.

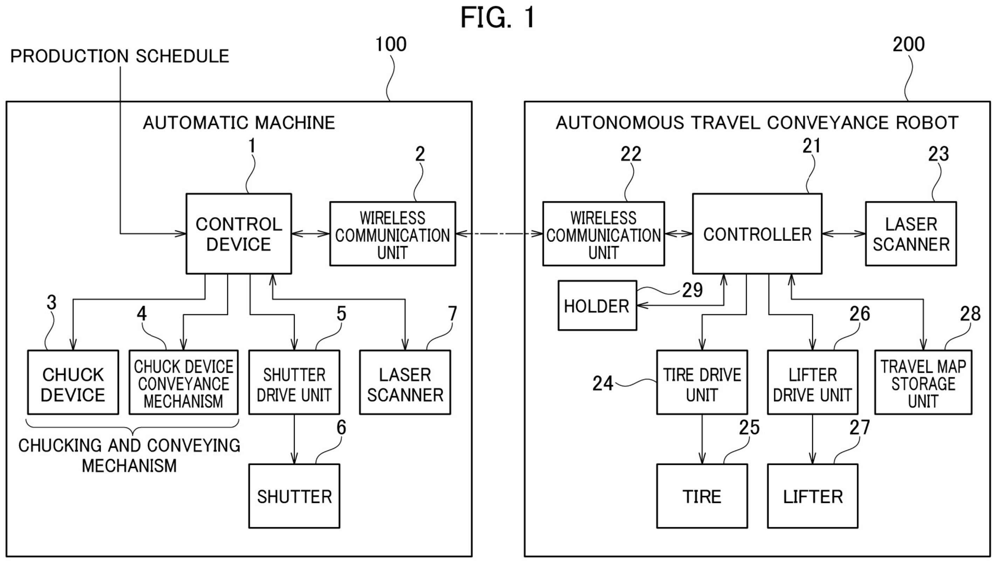

FIG. 1 shows an automatic machine according to one or more embodiments and an autonomous travel conveyance robot that cooperates with the automatic machine. An automatic machine 100 shown in FIG. 1 illustrates a configuration example where the automatic machine is a conveying device that conveys an item to be conveyed which is a component or a product. An autonomous travel conveyance robot 200 shown in FIG. 1 illustrates an example of a conveyor car that conveys the item to be conveyed. The autonomous travel conveyance robot may be referred to as an autonomous mobile robot (AMR). Hereinafter, the autonomous travel conveyance robot 200 will be referred to as the AMR 200. The conveyor car is not limited to the AMR and may be an automatic guided vehicle (AGV), or a rail guided vehicle (RGV).

As shown in FIG. 1, the automatic machine 100 includes a control device 1, a wireless communication unit 2 (first wireless communication unit), a chuck device 3, a chuck device conveyance mechanism 4, a shutter drive unit 5, a shutter 6, and a laser scanner 7. The control device 1 may be composed of a programmable logic controller (PLC). The wireless communication unit 2 communicates with a wireless communication unit 22 (second wireless communication unit) of the AMR 200, as described later and shown with a dotted line via wireless LAN, for example. Typically, the wireless LAN is wireless communication conforming to the IEEE 802.11 standard and commonly referred to as Wi-Fi. The wireless communication unit 2 may be composed of a communication circuit and a wireless transceiver.

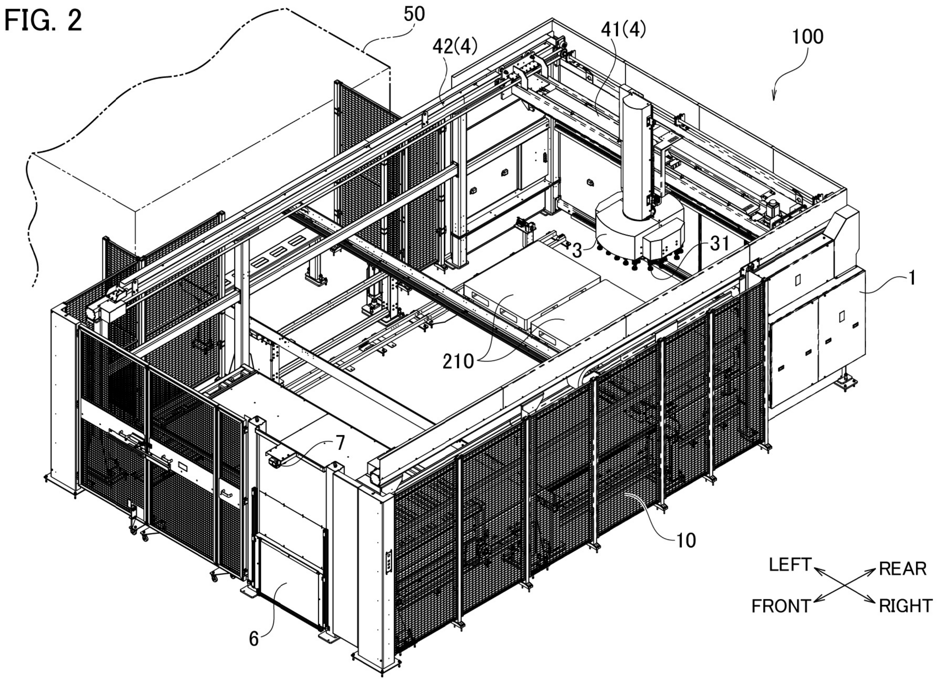

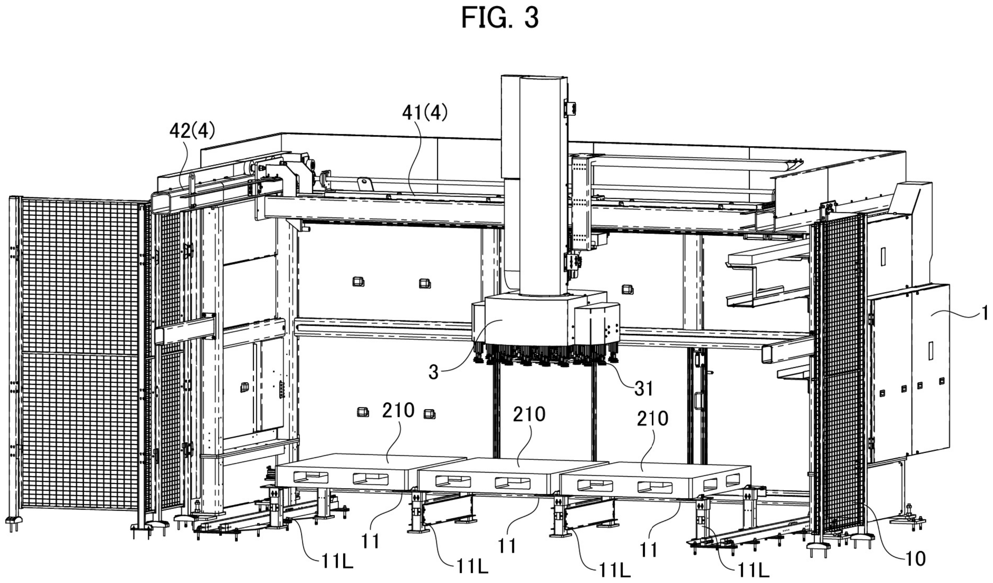

FIG. 2 is an external perspective view of the automatic machine 100. FIG. 3 is a partially enlarged perspective view of FIG. 2. As shown in FIG. 2, the automatic machine 100 is surrounded by a protective fence 10. The protective fence 10 may be composed of multiple fences. The protective fence 10 may be composed of a part that is a mesh fence and another part that is a plate-shaped fence, or may be entirely composed of the mesh fence. The control device 1 is mounted on the outer surface of the protective fence 10.

Within a rectangular region surrounded by the protective fence 10, the chuck device 3 is provided, and as parts of the chuck device conveyance mechanism 4, a rail 41 for conveying the chuck device 3 in a first direction and a rail 42 for conveying the rail 41 in a second direction orthogonal to the first direction are provided. The first direction is a left-right direction shown in FIG. 2, and the second direction is a front-rear direction shown in FIG. 2. On a lower surface of the chuck device 3, multiple vacuum pads 31 are attached. The chuck device conveyance mechanism 4 includes an unillustrated motor that moves the chuck device 3 in the first direction along the rail 41, and a drive unit such as an unillustrated that moves the rail 41 in the second direction along the rail 42.

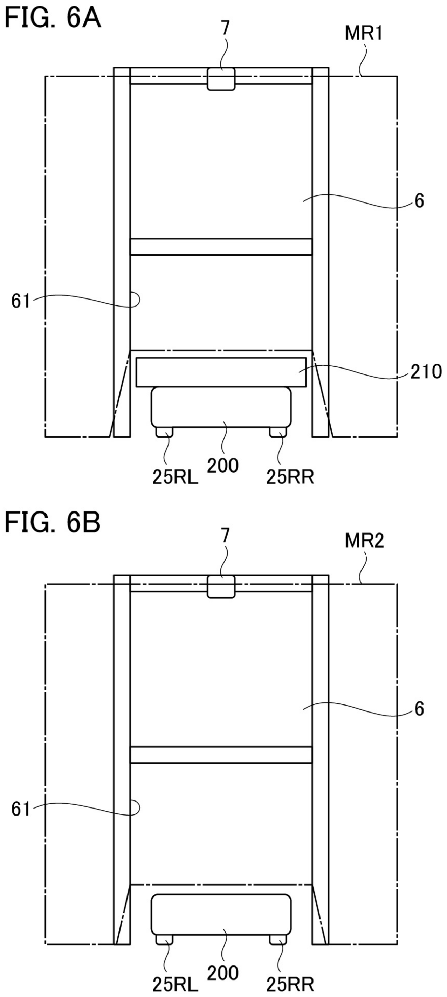

The shutter 6 is provided to enclose a part of the rectangular region of the automatic machine 100 in connection with the protective fence 10. When the shutter drive unit 5 raises a door provided at a lower end of shutter 6, an entrance 61 (see FIG. 6A, etc.) for the AMR 200 to enter is formed. The shutter 6 may be of a rolling type, and the door may be configured to slide left and right. If the shutter 6 is configured such that the entrance 61 extends upward from a lower end of the shutter, the entrance 61 through which the AMR 200 passes can be minimum. Therefore, the door of the shutter 6 is more preferably configured to move up and down rather than slide left and right. The term "shutter" includes a concept of what is called the "door" that forms an entrance by entirely sliding or rotating one or two plates.

Above the shutter 6, the laser scanner 7 is disposed. The laser scanner 7 is an example of a sensor that detects an object entering via the entrance 61 when the shutter 6 is opened. The object is a person who is not assumed to enter the area within the protective fence 10 or an article that is not assumed to be placed on the AMR 200. As will be described later, strictly, the laser scanner 7 detects any object that enters the monitoring region set to the entrance 61.

The laser scanner 7 may only be provided in the vicinity of the shutter 6. The vicinity of the shutter 6 means a short distance in a range where the object entering via the entrance 61 (monitoring region) can be detected. The laser scanner 7 detects the presence or absence of an object entering via the entrance 61 by emitting a laser beam downward. The laser scanner 7 may be disposed on the side of the shutter 6. In this case, the laser scanner 7 detects the presence or absence of the object entering via the entrance 61 by emitting a laser beam sideward.

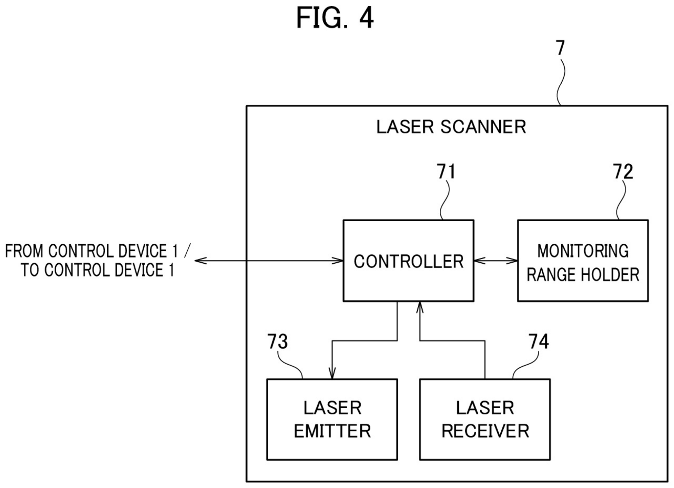

FIG. 4 shows a specific configuration example of the laser scanner 7. The laser scanner may be referred to as light detection and ranging (LiDAR). The laser scanner 7 includes a controller 71, a monitoring range holder 72, a laser emitter 73, and a laser receiver 74. The laser scanner 7 calculates a distance to a target object irradiated with the laser beam by use of a time-of-flight system. Specifically, the laser emitter 73 emits a laser beam downward under the control of the controller 71. The laser receiver 74 receives the laser beam reflected from the target object. The controller 71 converts, into a distance, a time from when the laser emitter 73 emits the laser beam until the laser receiver 74 receives the laser beam reflected and returned from the target object.

In the monitoring range holder 72, the set monitoring region is held depending on whether the AMR 200 is loaded, or a load amount when the AMR 200 is loaded with a load. The monitoring range holder 72 may be composed of a temporary memory to temporarily store the monitoring region. The monitoring region will be described later in detail.

As shown in FIG. 2, the automatic machine 100 is disposed adjacent to a laser processing machine 50 as an example of a machine tool. The laser processing machine 50 cuts a sheet metal in a known method to produce a component of a predetermined product, or the predetermined product. Hereinafter, an item to be conveyed that is produced by the laser processing machine 50 and conveyed by the automatic machine 100 and the AMR 200 will be referred to as the product. The automatic machine 100 may be disposed adjacent to a processing machine such as a bending machine other than the laser processing machine 50, or an automatic warehouse where multiple shelves each loaded with a pallet 210 are provided in multiple stages in a height direction. If multiple stages of shelves are considered as a group of shelves, the automatic warehouse includes a group of shelves, or two or more groups of shelves arranged in a lateral direction.

As shown in FIG. 3, platforms 11 each with pallet 210 placed thereon are provided at the end of the protective fence 10. In an example shown in FIG. 3, three platforms 11 are provided. The platform 11 is located at a predetermined height with multiple legs 11L. On the platform 11, the pallet 210 conveyed by the AMR 200 as described later is placed. The chuck device 3 and the chuck device conveyance mechanism 4 convey products produced by the laser processing machine 50 from the laser processing machine 50 to a designated pallet 210 and load the products onto the pallet 210. The chuck device 3 and the chuck device conveyance mechanism 4 constitute a chucking and conveying mechanism that chucks and conveys the item to be conveyed.

Returning to FIG. 1, the AMR 200 includes a controller 21, a wireless communication unit 22, a laser scanner 23, a tire drive unit 24, tires 25, a lifter drive unit 26, a lifter 27, a travel map storage unit 28, and a holder 29. The AMR 200 is loaded with an unillustrated battery and travels with power supplied from the battery. The controller 21 may be composed of a microprocessor or a microcomputer, for example. The wireless communication unit 22 communicates with the wireless communication unit 2 by wireless communication of the same communication standard as wireless communication of the wireless communication unit 2. The wireless communication unit 22 may be composed of a communication circuit and a wireless transceiver. The wireless communication units 2 and 22 transmit and receive various instructions, notifications, and requests as will be described later.

The laser scanner 23, like the laser scanner 7, calculates a distance to the target object irradiated with the laser beam by use of the time-of-flight system. The controller 21 determines the presence or absence of an obstacle that hinders autonomous travel based on the distance calculated by the laser scanner 23. The AMR 200 may further include a camera and may autonomously travel based on an image captured by the camera.

The tires 25 include at least front, rear, left and right tires, and may further include left and right tires in a center in the front-rear direction. The tire drive unit 24 may be composed of a motor, for example. The tire drive unit 24 drives the tires 25 under the control of the controller 21. The driving of the tire 25 includes driving for changing a travel direction of the AMR 200.

The lifter 27 is a mechanism that raises and lowers a top plate. The lifter drive unit 26 raises and lowers the lifter 27 under the control of the controller 21. When the lifter 27 is raised with the pallet 210 loaded on the AMR 200, the pallet 210 is lifted. The travel map storage unit 28 stores the map of a region where the AMR 200 travels. The travel map storage unit 28 may be composed of a rewritable memory. The holder 29 holds an identification value indicating a status of whether the AMR 200 is loaded with the pallet 210. The holder 29 holds an identification value indicating the load amount of the item to be conveyed when the AMR 200 is loaded with the pallet 210. The holder 29 may be composed of a memory.

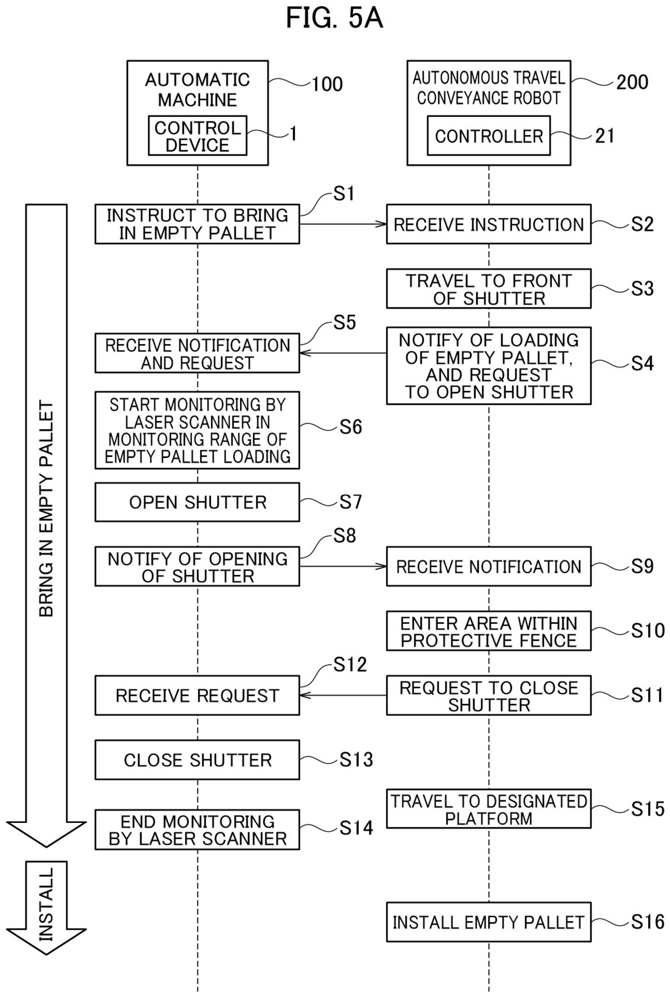

With reference to sequence diagrams shown in FIGS. 5A to 5D, a sequence of steps in which the automatic machine 100 and the AMR 200 cooperate to convey the item to be conveyed that is produced by the laser processing machine 50 to the outside of the automatic machine 100 will be described. In contrast to the states shown in FIGS. 2 and 3, it is assumed that the pallet 210 is not placed on the platform 11 on the most laser processing machine 50 side, for example. It may be assumed that the pallet 210 is not placed on two or all platforms 11.

In FIG. 5A, in step S1, the automatic machine 100 instructs the AMR 200 to bring in an empty pallet. The empty pallet is the pallet 210 in a state of no load being placed on the pallet 210. In step S2, the AMR 200 receives the instruction to bring in the empty pallet. In step S3, the AMR 200 travels to the front of the shutter 6 in a state of being loaded only with the empty pallet (first state). Currently, the holder 29 holds an identification value indicating the state of being loaded only with the empty pallet.

In step S4, the AMR 200 notifies the automatic machine 100 that the empty pallet is loaded and transmits a request to open the shutter 6. In step S5, the automatic machine 100 receives the notification and request from the AMR 200. In step S6, the automatic machine 100 starts monitoring by the laser scanner 7 in a monitoring range of the load of the empty pallet. In step S7, the control device 1 opens the shutter 6 in a state of monitoring whether an object enters an area within the protective fence 10.

FIG. 6A shows a monitoring region MR1 that is an example of a monitoring range from when the automatic machine 100 starts monitoring in step S6 until the end of the monitoring in step S14, which will be described later. The controller 71 of the laser scanner 7 sets a range of the entrance 61 to the monitoring region MR1, excluding the height and width of the AMR 200 loaded with the pallet 210 and including the pallet 210, and holds the range in the monitoring range holder 72 under the control of the control device 1. In FIG. 6A, rear left and right tires 25RL and 25RR in the tires 25 are visible.

The monitoring region MR1 and monitoring regions MR2 to MR5 described later may be at least two-dimensional regions formed in a plane orthogonal to the travel direction of the AMR 200, when the AMR 200 enters the area within the protective fence 10 through the entrance 61 formed by raising the shutter 6. The monitoring regions MR1 to MR5 are set adjacent to the shutter 6 in front of the shutter 6 (outside the automatic machine 100). The monitoring regions MR1 to MR5 may be three-dimensional regions having a predetermined distance in the travel direction of the AMR 200.

Returning to FIG. 5A, in step S8, the automatic machine 100 notifies the AMR 200 of the opening of the shutter 6. In step S9, the AMR 200 receives the notification from the automatic machine 100. In step S10, the AMR 200 enters the area within the protective fence 10 through the entrance 61. When the AMR 200 enters the area within the protective fence 10, the AMR 200 requests the automatic machine 100 to close the shutter 6 in step S11. In step S12, the automatic machine 100 receives the request from the AMR 200. In step S13, the control device 1 closes the shutter 6. In step S14, the automatic machine 100 ends the monitoring by the laser scanner 7.

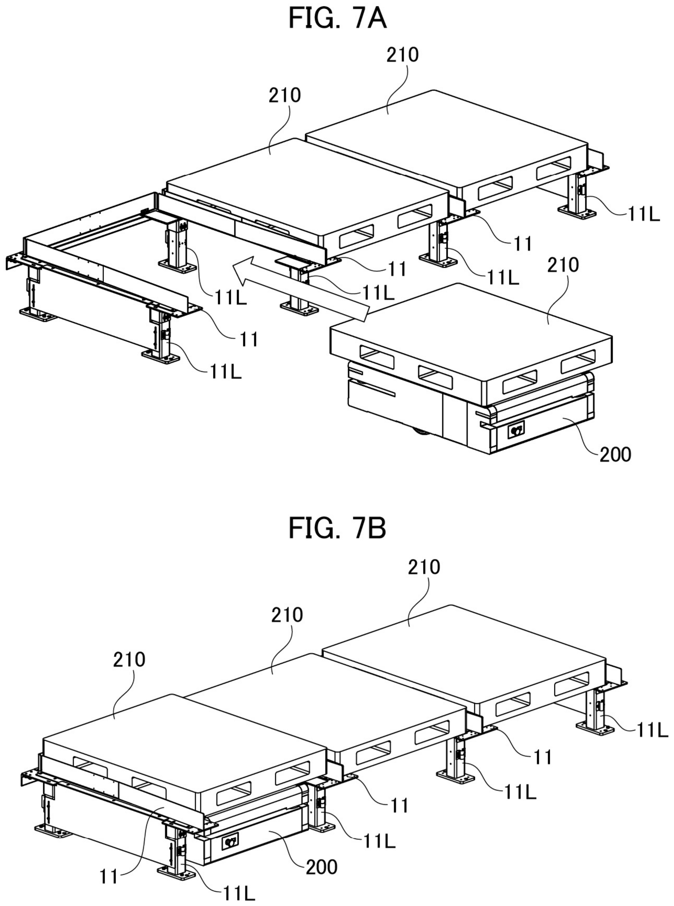

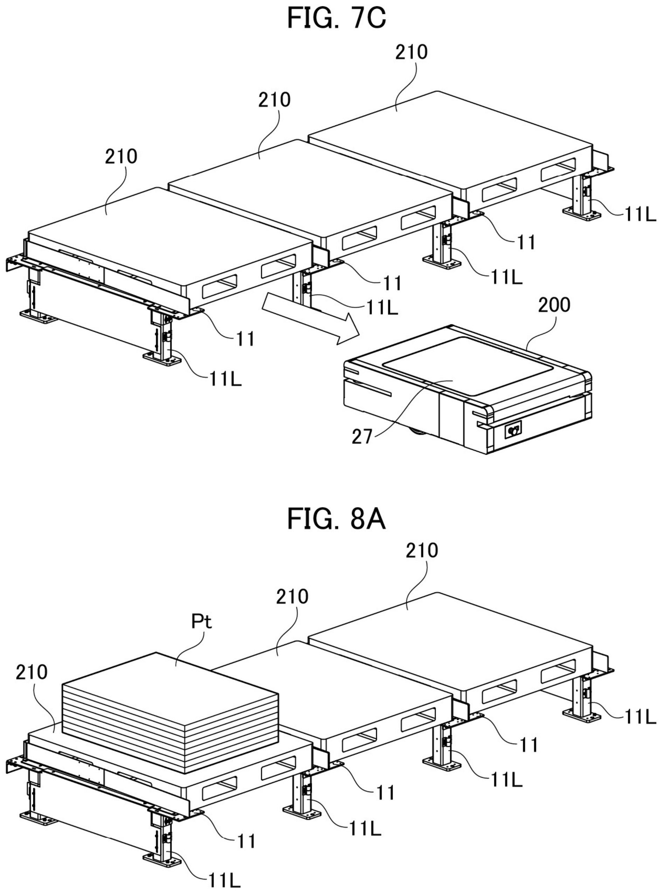

In step S15 after step S11, the AMR 200 travels to the designated platform 11 as shown in FIG. 7A. In step S16, the AMR 200 places the empty pallet on the platform 11. A specific operation in step S16 is as follows. When the AMR 200 loaded with the pallet 210 travels, the pallet 210 is in a lifted state by the lifter 27 (see FIG. 7C). As shown in FIG. 7B, when the AMR 200 moves under the platform 11, the pallet 210 is located away from the platform 11 and above the platform 11. When the controller 21 controls the lifter drive unit 26 to lower the lifter 27, the pallet 210 is placed on the platform 11.

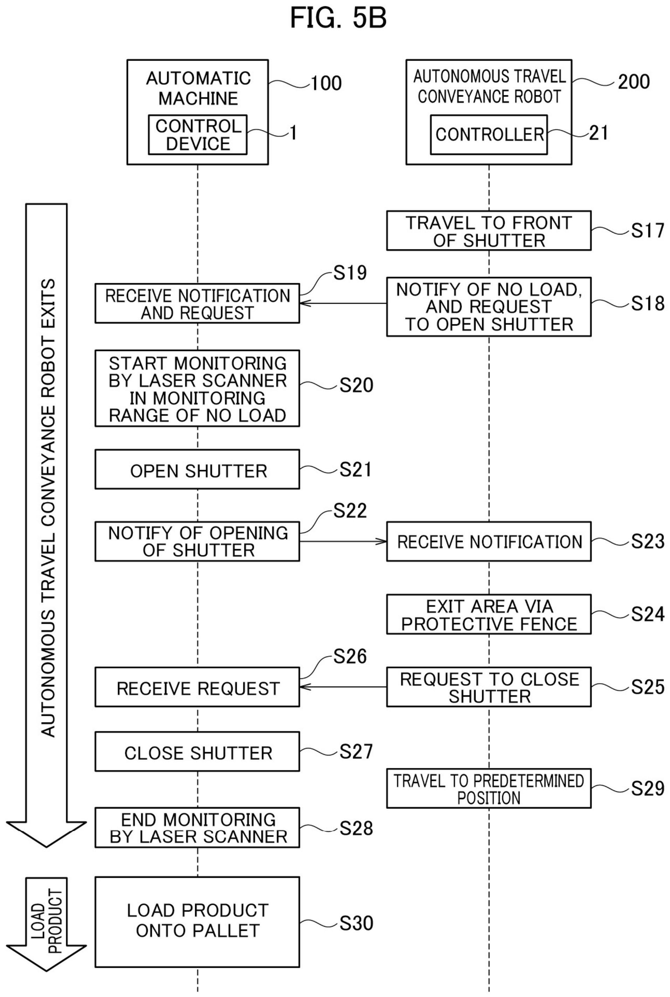

In step S17 in FIG. 5B, the AMR 200 travels to the front of the shutter 6 within the protective fence 10, in an unloaded state (second state) of no load being loaded on the pallet 210 as shown in FIG. 7C. Currently, the holder 29 holds an identification value indicating the unloaded state. In step S18, the AMR 200 notifies the automatic machine 100 that there is no load and requests that the shutter 6 be opened. In step S19, the automatic machine 100 receives the notification and request from the AMR 200. In step S20, the automatic machine 100 starts monitoring by the laser scanner 7 in a monitoring range for the unloaded state. In step S21, the control device 1 opens the shutter 6 in a state of monitoring whether an object enters the area within the protective fence 10.

FIG. 6B shows the monitoring region MR2 as an example of a monitoring range from when the automatic machine 100 starts monitoring in step S20 until the end of the monitoring in step S28, which will be described later. The controller 71 of the laser scanner 7 sets a range of the entrance 61 to the monitoring region MR2, excluding the height and width of the AMR 200 with no pallet 210 loaded thereon under the control of the control device 1, and holds the range in the monitoring range holder 72.

Returning to FIG. 5B, in step S22, the automatic machine 100 notifies the AMR 200 that the shutter 6 is opened. In step S23, the AMR 200 receives the notification from the automatic machine 100. In step S24, the AMR 200 exits the area via the protective fence 10 through the entrance 61. When the AMR 200 exits the area via the protective fence 10, the AMR 200 requests the automatic machine 100 to close the shutter 6 in step S25. In step S26, the automatic machine 100 receives the request from the AMR 200. In step S27, the control device 1 closes the shutter 6. In step S28, the automatic machine 100 ends the monitoring by the laser scanner 7.

In step S29 after step S25, the AMR 200 travels to a predetermined position. The predetermined position is a standby place of the AMR 200, for example.

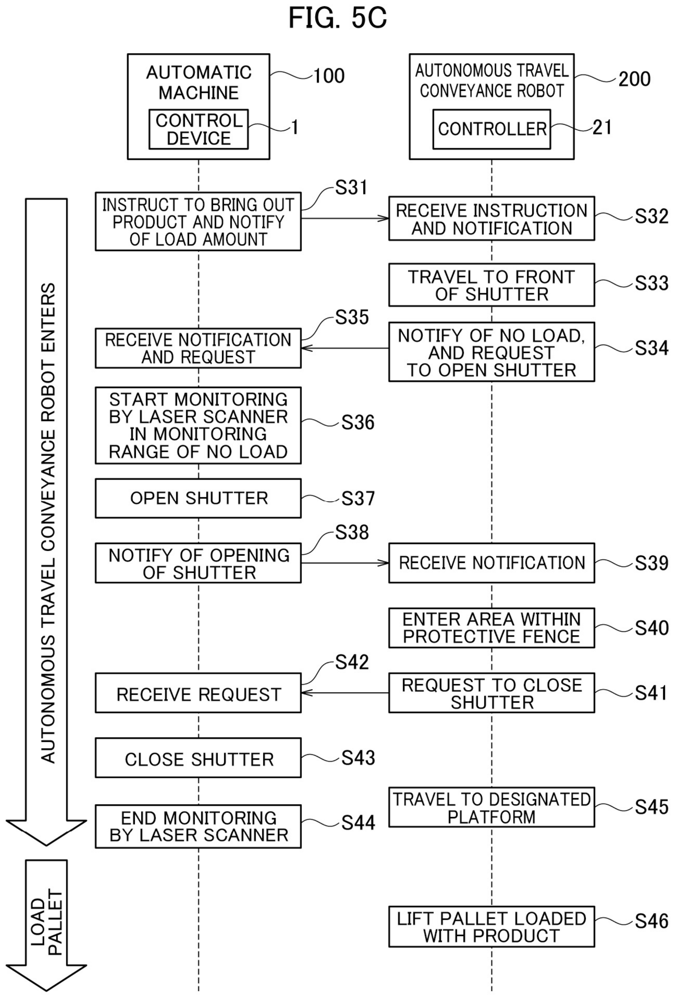

As shown in FIG. 8A, in step S30, the automatic machine 100 loads a product Pt onto the pallet 210. In FIG. 5C, the automatic machine 100, upon completing the loading of the product Pt, instructs the AMR 200 to bring out the product Pt and notifies a load amount of the product Pt in step S31. The wireless communication unit 2 may notify the wireless communication unit 22 of the load amount of the product Pt loaded on the pallet 210, based on a production schedule of the product Pt by the laser processing machine 50, under the control of the control device 1. Thus, it is possible to reliably notify the AMR 200 of the load amount of the product Pt.

In step S32, the AMR 200 receives the instruction and notification from the automatic machine 100. In step S33, the AMR 200 in an unloaded state travels to the front of the shutter 6. Currently, the holder 29 holds an identification value indicating the unloaded state.

In step S34, the AMR 200 notifies the automatic machine 100 of the unloaded state and requests the automatic machine to open the shutter 6. In step S35, the automatic machine 100 receives the notification and request from the AMR 200. In step S36, the automatic machine 100 starts monitoring by the laser scanner 7 in a monitoring range for the unloaded state. In step S37, the control device 1 opens the shutter 6 in the state of monitoring whether the object enters the area within the protective fence 10. A monitoring range from step S36 to step S44, which will be described later, is the monitoring region MR2 shown in FIG. 6B.

In step S38, the automatic machine 100 notifies the AMR 200 that the shutter 6 is opened. In step S39, the AMR 200 receives the notification from the automatic machine 100. In step S40, the AMR 200 enters the area within the protective fence 10 through the entrance 61. When the AMR 200 enters the area within the protective fence 10, the AMR 200 requests the automatic machine 100 to close the shutter 6 in step S41. In step S42, the automatic machine 100 receives the request. In step S43, the control device 1 closes the shutter 6. In step S44, the automatic machine 100 ends the monitoring by the laser scanner 7.

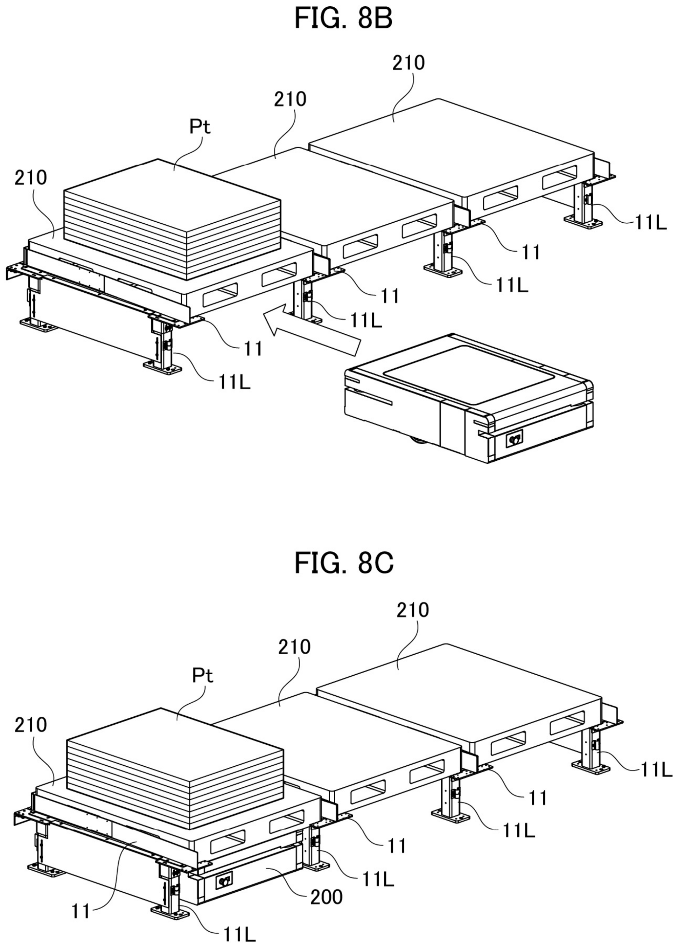

In step S45 after step S41, the AMR 200 travels to a designated platform 11 as shown in FIG. 8B. Then, as shown in FIG. 8C, the AMR 200 moves under the platform 11. In step S46, the controller 21 controls the lifter drive unit 26 to raise the lifter 27, lifting the pallet 210 loaded with the product Pt.

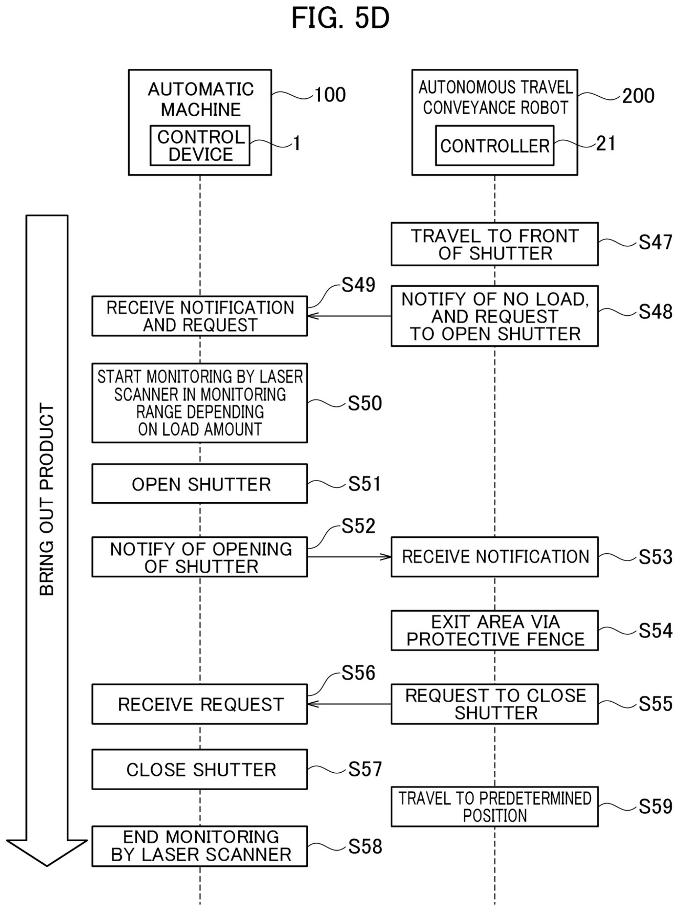

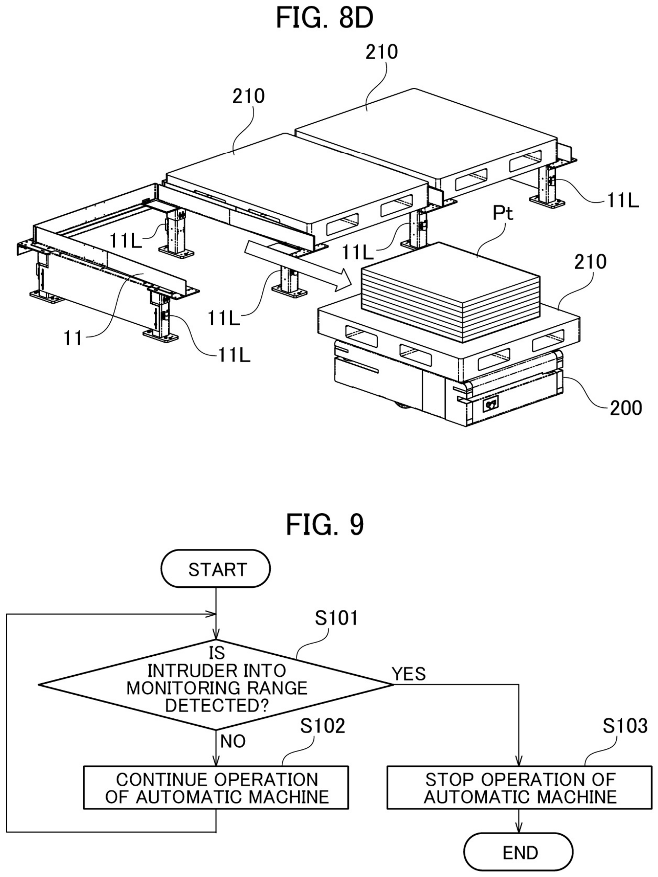

In FIG. 5D, in step S47, the AMR 200 travels away from the platform 11 to the front of the shutter 6 within the protective fence 10, in a state of being loaded with the pallet 210 loaded with the product Pt (third state), as shown in FIG. 8D. Currently, the holder 29 holds an identification value indicating the load amount of the product Pt. In step S48, the AMR 200 notifies the automatic machine 100 of the load amount of the product Pt and requests the automatic machine to open the shutter 6.

In step S49, the automatic machine 100 receives the notification and request from the AMR 200. In step S50, the automatic machine 100 starts monitoring by the laser scanner 7 in a monitoring range depending on the load amount of the product Pt. In step S51, the control device 1 opens the shutter 6, in a state of monitoring whether an object enters the area within the protective fence 10.

In step S48, the AMR 200 is configured to notify the automatic machine 100 of the load amount of the product Pt notified by the automatic machine 100 for the following reasons. The AMR 200 notifies the automatic machine 100 that the empty pallet is loaded in step S4 and notifies the automatic machine 100 that the AMR 200 is unloaded in steps S18 and S34. If the AMR 200 also notifies the automatic machine 100 of the load amount of the product Pt, the automatic machine 100 can set the monitoring range by a standardized process.

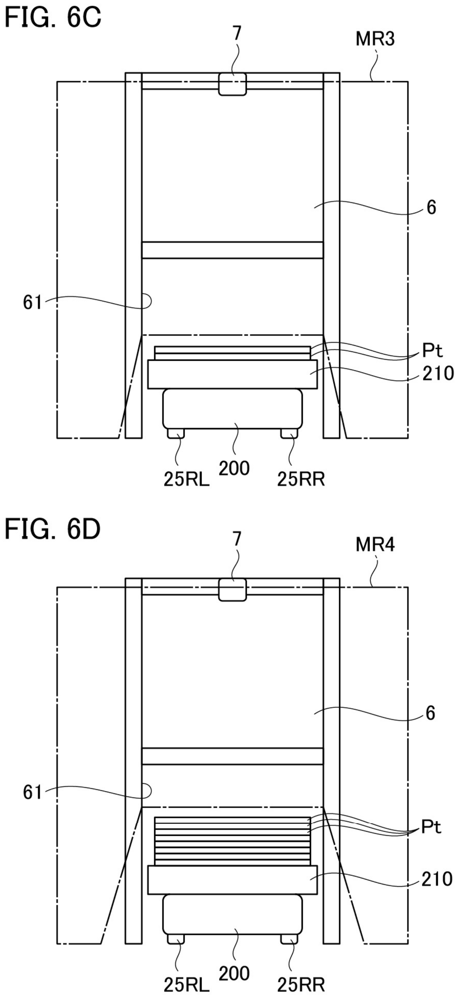

FIG. 6C shows the monitoring region MR3, which is a first example of a monitoring range from when the automatic machine 100 starts monitoring in step S50 until the end of the monitoring in step S58, which will be described later. FIG. 6C shows the example where the load amount of the product Pt is small, with two products Pt loaded on the pallet 210. FIG. 6D shows the monitoring region MR4, which is a second example of the monitoring range from when the automatic machine 100 starts monitoring in step S50 until the end of the monitoring in step S58, which will be described later, and FIG. 6D shows the example where the load amount of the product Pt is large, with eight products Pt loaded on the pallet 210. The products Pt may include any number of one or more products at or below an upper limit of the load amount.

The controller 71 of the laser scanner 7 sets a range of the entrance 61 to the monitoring region MR3 or MR4, excluding the height and width of the product Pt and the pallet 210, under the control of the control device 1, depending on the load amount of the product Pt on the pallet 210.

As shown in FIGS. 6A to 6D, the controller 71 sets the monitoring regions MR1 to MR4 depending on the presence or absence of the load on the AMR 200 or the height of the load if any, and holds the monitoring regions in the monitoring range holder 72, to set an appropriate monitoring region depending on the state of the AMR 200. Therefore, it is almost certainly detected that an unexpected object enters the area within the protective fence 10 via the entrance 61 for the AMR 200.

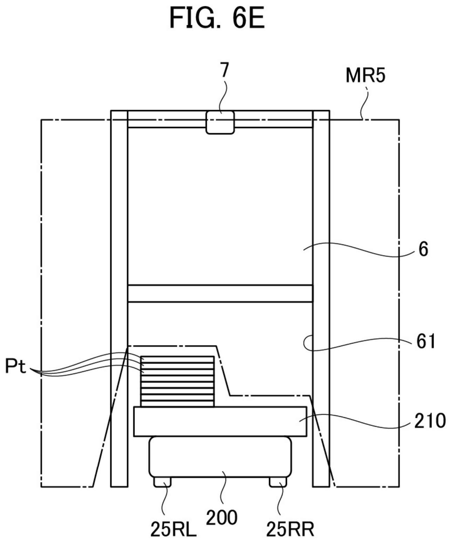

The automatic machine 100 may load a small product Pt processed by the laser processing machine 50 only in a partial region on the pallet 210. In this case, as shown in FIG. 6E, the AMR 200 passes through the entrance 61 in a state of being loaded with the product Pt only in the partial region on the pallet 210 (fourth state). In such cases, the controller 71 is preferably configured to set the monitoring region MR5 depending on the load amount and load position of the product Pt on the pallet 210, under the control of the control device 1.

On setting the monitoring region depending on the load amount and load position of the product Pt, the controller 71 can set an appropriate monitoring region even if the product Pt is loaded only in the partial region. To set the monitoring region MR5 shown in FIG. 6E, the automatic machine 100 notifies the AMR 200 of the load amount of the product Pt and the load position on the pallet 210 in step S31. The holder 29 holds an identification value indicating the load amount of the product Pt and an identification value indicating the load position on the pallet 210.

Upon receiving, by the wireless communication unit 2, the request to open the shutter 6 along with the load amount and load position, the laser scanner 7 may specifically set the monitoring region MR5 as follows. The monitoring region MR5 is a range of the entrance 61 corresponding to the partial region where the product Pt is loaded and excluding the height and width of the AMR 200 including the product Pt and the pallet 210, and corresponding to another region where the product Pt is not loaded and excluding the height and width of the AMR 200 including the pallet 210.

Returning to FIG. 5D, in step S52, the automatic machine 100 notifies the AMR 200 that the shutter 6 is opened. In step S53, the AMR 200 receives the notification from the automatic machine 100. In step S54, the AMR 200 exits the area via the protective fence 10 through the entrance 61. When the AMR 200 exits the area via the protective fence 10, the AMR 200 requests the automatic machine 100 to close the shutter 6 in step S55. In step S56, the automatic machine 100 receives the request from the AMR 200. In step S57, the control device 1 closes the shutter 6. In step S58, the automatic machine 100 ends the monitoring by the laser scanner 7.

In step S59 after step S55, the AMR 200 travels to a predetermined position. The predetermined position may be an installation place of another machine tool such as a bending machine that further processes the product Pt or may be a storage place of the product Pt.

In steps S6 to S14 of FIG. 5A, steps S20 to S28 of FIG. 5B, steps S36 to S44 of FIG. 5C, and steps S50 to S58 of FIG. 5D, the control device 1 executes control of the operation of the automatic machine 100 as shown in FIG. 9, based on the monitoring by the laser scanner 7. On starting the monitoring by the laser scanner 7, the control device 1 starts the process shown in FIG. 9.

In FIG. 9, in step S101, the control device 1 determines whether an entrant into the monitoring range has been detected. The entrant is a person who attempts to enter the area within the protective fence 10 through the entrance 61 or an article that is wrongly placed on the AMR 200.

Taking the monitoring region MR1 shown in FIG. 6A as an example, if there are no entrant on the pallet 210, the controller 71 of the laser scanner 7 detects a distance based on a time until the laser emitter 73 emits a laser beam and the laser receiver 74 receives the laser beam reflected by the pallet 210. The distance detected at this time is longer than the distance set to the monitoring region MR1, and hence the controller 71 does not detect the AMR 200 loaded with the pallet 210 as the entrant. If there is an entrant on the pallet 210, however, the controller 71 detects a distance that is less than or equal to the distance set to the monitoring region MR1, and the entrant on the pallet 210 can be therefore detected.

Returning to FIG. 9, if the entrant is not detected in step S101 (NO), the control device 1 continues the operation of the automatic machine 100 (operation of the chuck device 3 and the chuck device conveyance mechanism 4) in step S102, to return the process to step S101. If the entrant is detected in step S101 (YES), the control device 1 determines that an object has entered the area within the protective fence 10 and, in step S103, stops the operation of the automatic machine 100 to end the process. The automatic machine 100 can ensure safety, even if the object enters the area within the protective fence 10 through the entrance 61 for the AMR 200.

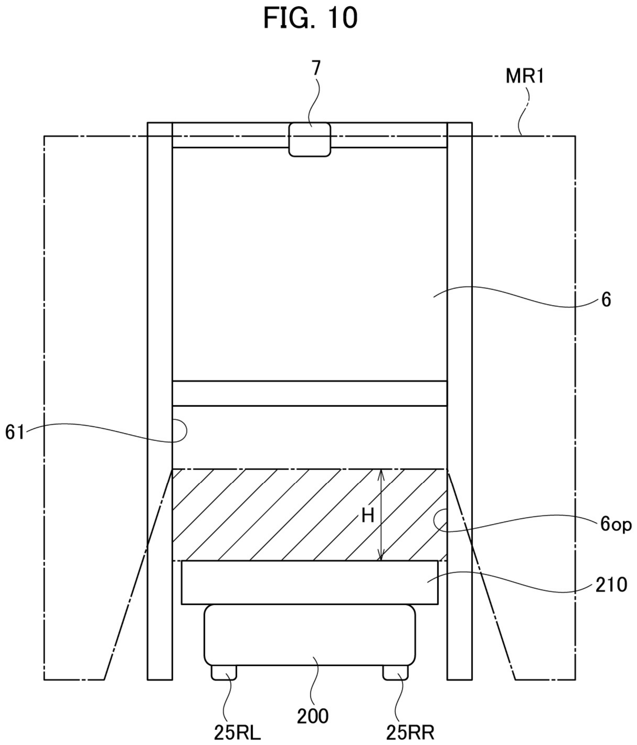

In the automatic machine 100 described above, to further improve safety, the controller 71 preferably sets the monitoring regions MR1 to MR5 as follows. FIG. 10 shows the representative monitoring region MR1. When there is a load on the AMR 200, the controller 71 sets the monitoring region MR1 so that a rectangular opening 6op having a height H in excess of 180 mm is not formed between an upper end of the load and a lower end of the monitoring region MR1 above the load. The load in FIG. 10 is the pallet 210. The monitoring region MR1 shown in FIG. 6A is an example where the height H of the rectangular opening 6op is made extremely small.

As shown in FIG. 6B, when there is no load on the AMR 200, the controller 71 sets the monitoring region MR2 so that the rectangular opening 6op having the height H in excess of 180 mm is not formed between an upper end of the AMR 200 and the lower end of the monitoring region MR2 above the AMR 200. As shown in FIGS. 6C and 6D, when the product Pt is loaded on the pallet 210, the monitoring region MR3 or MR4 may be set so that the rectangular opening 6op having the height H in excess of 180 mm is not formed between an upper end of the product Pt and the lower end of the monitoring region MR3 or MR4 above the product Pt.

When loading the product Pt on the pallet 210 as shown in FIGS. 6C and 6D, it is necessary to locate the lower end of the monitoring region MR3 or MR4 above the product Pt to be higher as the load amount of the product Pt increases. Currently, if the lower end of the monitoring region MR3 or MR4 above the product Pt is raised by a unit of 180 mm or less in the height direction, the rectangular opening 6op having the height H in excess of 180 mm is not formed.

In FIGS. 6A to 6D, the control device 1 raises the shutter 6 to the top position, fully opening the entrance 61. In each state of FIGS. 6A to 6D, the control device 1 may vary an amount of rise of the shutter 6 depending on the presence or absence of the load on the pallet 210, and the height when the load is present. Thus, in the entrance 61, an opening having a minimum breadth through which the AMR 200 can pass is formed depending on the presence or absence of the load on pallet 210 and the height when the load is present, and it is therefore possible to prevent the object from entering the area within the protective fence 10.

Furthermore, after the AMR 200 enters the area within the protective fence 10, the automatic machine 100 receives the request to close the shutter 6 in step S12 of FIG. 5A and step S42 of FIG. 5C and then closes the shutter 6 in steps S13 and S43, and it is preferable to close the shutter 6 at the following timing.

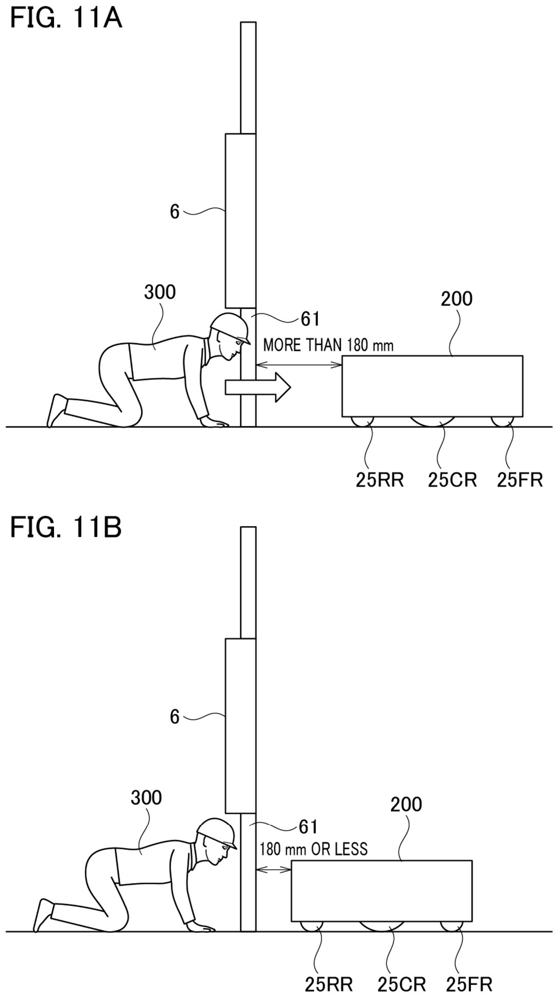

As shown in FIG. 11A, when the AMR 200 enters the area within the protective fence 10 and a distance from an inner end of the entrance 61 to a rear end of the AMR 200 is in excess of 180 mm, it becomes easier for an entrant 300 to enter the area within the protective fence 10. As shown in FIG. 11B, if the distance from the inner end of the entrance 61 to the rear end of the AMR 200 is 180 mm or less, the entrant 300 can hardly enter the area within the protective fence 10. In FIGS. 11A and 11B, the front, center, and rear right tires 25FR, 25CR, and 25RR are visible among the tires 25.

Therefore, the control device 1 may receive the request to close the shutter 6 and start lowering the shutter 6, at a timing at which the distance from the inner end of the entrance 61 to the rear end of the AMR 200 is 180 mm or less after the AMR 200 enters the area within the protective fence 10. Preferably, the control device 1 may complete the lowering of the shutter 6 to satisfy conditions that the distance from the inner end of the entrance 61 to the rear end of the AMR 200 is 180 mm or less during the entire time from the start of the lowering of the shutter 6 to the completion of the lowering.

The AMR 200 may execute steps S11 and S41 and request the automatic machine 100 to close the shutter 6 at appropriate timings after the AMR 200 enters the area within the protective fence 10 so that the automatic machine 100 starts the lowering of the shutter 6 at the above timing and completes the lowering of the shutter 6 to satisfy the above conditions.

To satisfy the above conditions, the AMR may be configured as an example as follows. When the AMR 200 enters the area within the protective fence 10 and travels to a predetermined position where the distance from the inner end of the entrance 61 to the rear end of the AMR 200 is 180 mm or less, the AMR stops once and requests the automatic machine 100 to close the shutter 6. The automatic machine 100 notifies the AMR 200 of the closing of the shutter 6, after completing the lowering of the shutter 6 and fully closing the shutter 6. The AMR 200 starts traveling to the designated platform 11 upon receiving the notification of the closing of the shutter 6.

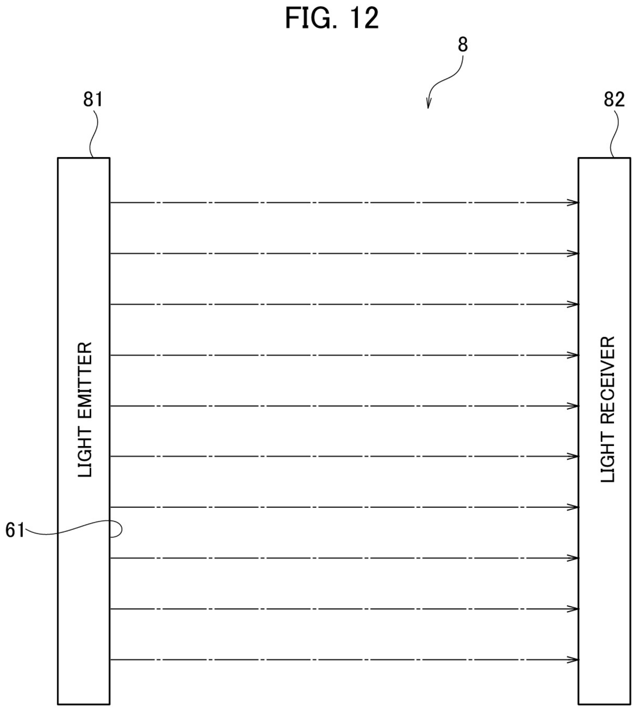

In place of the laser scanner 7, such a safety light curtain 8 as shown in FIG. 12 may be used as a sensor that detects the object entering via the entrance 61. The safety light curtain 8 includes a light emitter 81 that emits a light beam shown by a dotted line at multiple positions in an up-down direction, and a light receiver 82 that receives the light beam emitted from the light emitter 81. If the light receiver 82 does not receive any light beam emitted from the light emitter 81, it is meant that the AMR 200 enters the area via the entrance 61 or some entrant enters.

Similar to the monitoring regions MR1 to MR4, a region is set where it is not considered that an entrant enters when the AMR 200 enters a lower end of the safety light curtain 8, and the control device 1 does not determine that an entrant is detected even if the light receiver 82 does not receive a light beam passing through that region. When the safety light curtain 8 is used as the sensor and if the load position of the product Pt is uneven as shown in FIG. 6E, entry of a part of entrant's body, such as a hand, may not be detected from a position where the product Pt is not loaded. Therefore, it is preferable to use the laser scanner 7 rather than the safety light curtain 8 as the sensor.

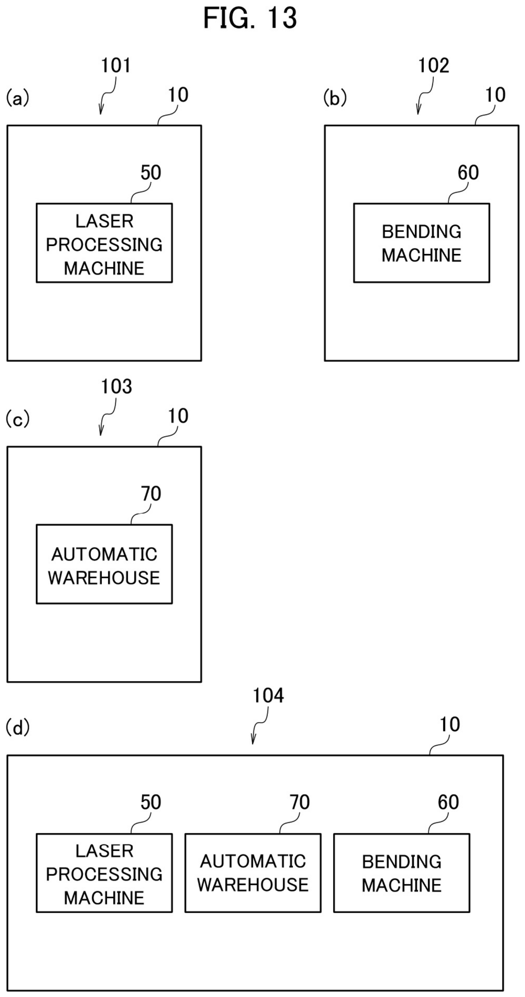

Incidentally, the automatic machine is not limited to the automatic machine 100 including the conveying device configured to convey the item to be conveyed and surrounded by the protective fence 10 as shown in FIG. 2 and may include various configurations illustrated in (a) to (d) of FIG. 13. An automatic machine 101 shown in (a) of FIG. 13 includes a configuration in which the laser processing machine 50 is surrounded by the protective fence 10, while an automatic machine 102 shown in (b) of FIG. 13 includes a configuration in which a bending machine 60 is surrounded by the protective fence 10. An automatic machine 103 shown in (c) of FIG. 13 includes a configuration in which an automatic warehouse 70 is surrounded by the protective fence 10. As described above, the automatic machine includes a configuration in which in the automatic warehouse 70, multiple stages of shelves to be loaded with the pallet 210 are arranged in a group or multiple groups arranged laterally, and the pallet 210 is automatically brought in and brought out.

An automatic machine 104 shown in (d) of FIG. 13 includes a configuration in which the laser processing machine 50, the bending machine 60 and the automatic warehouse 70 are surrounded by the protective fence 10. In the automatic machine 104, the laser processing machine 50 cuts a workpiece such as a sheet metal, and the automatic warehouse 70 temporarily stores the cut workpiece loaded on the pallet 210. In the automatic machine 104, the bending machine 60 bends the workpiece stored in the automatic warehouse 70. The automatic warehouse 70 temporarily stores the bent workpiece loaded on the pallet 210.

An automatic machine according to one or more embodiments may include a configuration in which any machine configured to perform an unmanned automatic operation is surrounded by the protective fence 10. The automatic machine according to one or more embodiments may include a configuration in which one type of machine is within the protective fence 10 as in the automatic machines 100 to 103, or a configuration in which multiple types of machines are within the protective fence as in the automatic machine 104.

The present invention is not limited to one or more embodiments described above, and various modifications can be made without departing from the scope of the present invention. For example, the function of the controller 71 of the laser scanner 7 may be provided in the control device 1. The monitoring range holder 72 may be provided outside the laser scanner 7. The controller 71 and the monitoring range holder 72 may be provided at either an internal position or an external position relative to the laser scanner 7 in the automatic machine 100 (or 101 to 104).

This application claims priority based on Japanese Patent Application No. 2023-004400 filed with the Japan Patent Office on January 16, 2023, the entire disclosed content of which is incorporated herein by reference.

## Claims

1. An automatic machine comprising:
a shutter provided in a protective fence of the automatic machine surrounded by the protective fence, the shutter being configured to open and close an entrance for a conveyor car to enter for conveying an item to be conveyed which is a component or a product;
a shutter drive unit configured to drive the shutter to open and close the entrance;
a sensor provided in a vicinity of the shutter, and configured to detect an object entering a monitoring region set to the entrance when the shutter is opened; and
a control device configured to control the shutter drive unit to open the shutter when the conveyor car enters an area within the protective fence and exits the area via the protective fence, and to control the automatic machine to stop an operation of the automatic machine when the sensor detects the object entering the monitoring region while the shutter is opened.

2. The automatic machine according to claim 1, further comprising:
a controller configured to:
when the conveyor car is in a first state of being loaded only with a pallet as a load on the conveyor car, set to the monitoring region a range of the entrance excluding a height and a width of the conveyor car loaded with the pallet and including the pallet,
when the conveyor car is in a second state of no load being loaded on the conveyor car, set to the monitoring region a range of the entrance excluding the height and the width of the conveyor car,
when the conveyor car is in a third state of being loaded with, as a load on the conveyor car, a pallet loaded with one or more items to be conveyed, set to the monitoring region a range of the entrance excluding a height and a width of the conveyor car loaded with the pallet loaded with the one or more items to be conveyed and including the one or more items to be conveyed and the pallet, depending on a load amount of the one or more items to be conveyed on the pallet, and
detect presence or absence of an object entering the set monitoring region in each of the first to third states and notify the control device that the object enters upon detecting the entry of the object.

3. The automatic machine according to claim 2, wherein the sensor is a laser scanner configured to irradiate the monitoring region with a laser beam, to convert, into a distance, a time until the laser beam is reflected by the monitoring region and returned, and to detect the entry of the object based on the converted distance.

4. The automatic machine according to claim 2 or 3, further comprising:
a first wireless communication unit configured to wirelessly communicate with the conveyor car,
the conveyor car including a second wireless communication unit configured to wirelessly communicate with the first wireless communication unit,
the automatic machine being a conveying device configured to convey the one or more items to be conveyed that is processed by the processing machine and load the one or more items to be conveyed on the pallet while the pallet is placed at a predetermined position within the protective fence, wherein
the first wireless communication unit notifies the second wireless communication unit of a load amount of the one or more items to be conveyed that are loaded on the pallet, based on a production schedule of the one or more items to be conveyed by the processing machine, under the control of the control device,
the first wireless communication unit receives the load amount notified by the second wireless communication unit, when the conveyor car requests the control device to open the shutter, and
the controller sets the monitoring region depending on the notified load amount.

5. The automatic machine according to claim 4, wherein the first wireless communication unit notifies the second wireless communication unit of a load position at which the one or more items to be conveyed is loaded on the pallet,
the first wireless communication unit receives the load amount and the load position notified by the second wireless communication unit, when the conveyor car requests the control device to open the shutter, and
the controller sets the monitoring region depending on the load amount and the load position that are notified.

6. A control method for an automatic machine, comprising:
receiving, by a wireless communication unit provided in the automatic machine surrounded by a protective fence, a request to open a shutter, transmitted from a conveyor car configured to convey an item to be conveyed which is a component or a product, the shutter being provided in the protective fence and configured to open and close an entrance for the conveyor car to enter;
upon receiving, by the wireless communication unit, the request to open the shutter, setting, by a sensor provided in a vicinity of the shutter, a monitoring region at the entrance to detect entry of an object into an area within the protective fence, and starting monitoring whether the object enters the monitoring region;
in a state of monitoring whether the object enters the monitoring region, controlling, by a control device provided in the automatic machine, a shutter drive unit to open the shutter;
the control device continuing an operation of the automatic machine when the sensor does not detect the entry of the object into the monitoring region, and stopping the operation of the automatic machine when the sensor detects the entry of the object into the monitoring region;
receiving, by the wireless communication unit, a request to close the shutter, transmitted from the conveyor car that has entered the area within the protective fence;
upon receiving, by the wireless communication unit, the request to close the shutter, controlling, by the control device, the shutter drive unit to close the shutter; and
stopping the monitoring by the sensor on whether the object enters the monitoring region, after the shutter is closed.

7. The control method for the automatic machine according to claim 6, further comprising:
when the conveyor car requesting the opening of the shutter is in a first state of being loaded only with a pallet as a load on the conveyor car, receiving, by the wireless communication unit, a notification transmitted from the conveyor car and indicating that the conveyor car is in the first state; and
upon receiving, by the wireless communication unit, the notification indicating that the conveyor car is in the first state, setting, by the sensor, to the monitoring region a range of the entrance excluding a height and a width of the conveyor car loaded with the pallet and including the pallet.

8. The control method for the automatic machine according to claim 6 or 7, further comprising:
when the conveyor car requesting the opening of the shutter is in a second state of no load being loaded on the conveyor car, receiving, by the wireless communication unit, a notification transmitted from the conveyor car and indicating that the conveyor car is in the second state; and
upon receiving, by the wireless communication unit, the notification indicating that the conveyor car is in the second state, setting, by the sensor, to the monitoring region a range of the entrance excluding the height and the width of the conveyor car.

9. The control method for the automatic machine according to claim 6, further comprising:
conveying, by the automatic machine, one or more items to be conveyed that are processed by a processing machine and loading the one or more items to be conveyed on the pallet while the pallet is placed at a predetermined location within the protective fence;
when the conveyor car that has entered the automatic machine is in a third state of being loaded with, as a load on the conveyor car, the pallet loaded with one or more items to be conveyed, receiving, by the wireless communication unit, the request to open the shutter and a load amount of the one or more items to be conveyed on the pallet that are transmitted from the conveyor car;
upon receiving, by the wireless communication unit, the request to open the shutter and the load amount, setting, by the sensor, to the monitoring region a range of the entrance excluding the height and the width of the conveyor car loaded with the pallet loaded with the one or more items to be conveyed and including the one or more items to be conveyed and the pallet, depending on the load amount;
in a state of monitoring whether an object enters the monitoring region, controlling, by the control device, the shutter drive unit to open the shutter;
receiving, by the wireless communication unit, a request to close the shutter, transmitted from the conveyor car that has exited the area via the protective fence;
upon receiving the request to close the shutter, controlling, by the control device, the shutter drive unit to close the shutter; and
stopping the monitoring by the sensor on whether the object enters the monitoring region, after the shutter is closed.

10. The control method for the automatic machine according to claim 9, further comprising:
loading, by the automatic machine, the one or more items to be conveyed that are processed by the processing machine only in a partial region on the pallet;
in a fourth state where the conveyor car that has entered the area within the protective fence is loaded with, as a load on the conveyor car, the pallet loaded with the one or more items to be conveyed only in the partial region, receiving, by the wireless communication unit, the request to open the shutter transmitted from the conveyor car, as well as a load amount and a load position of the one or more items to be conveyed on the pallet;
upon receiving, by the wireless communication unit, the request to open the shutter along with the load amount and the load position, setting, by the sensor, to the monitoring region a range of the entrance corresponding to the partial region loaded with the one or more items to be conveyed and excluding a height and a width of the conveyor car including the one or more items to be conveyed and the pallet, and corresponding to another region with the one or more items to be conveyed not being loaded thereon and excluding a height and a width of the conveyor car including the pallet, depending on the load amount and the load position; and monitoring whether an object enters the monitoring region.

11. The control method for the automatic machine according to claim 9 or 10, further comprising:
notifying, by the automatic machine, the conveyor car of the load amount based on a production schedule of the one or more items to be conveyed by the processing machine.

12. The control method for the automatic machine according to any one of claims 6 to 11, further comprising:
after the conveyor car enters the area within the protective fence, receiving, by the wireless communication unit, a request to close the shutter at a timing at which a distance from an inner end of the entrance to a rear end of the conveyor car is 180 mm or less; and
controlling, by the control device, the shutter drive unit to start closing the shutter at a timing at which the distance from the inner end of the entrance to the rear end of the conveyor car is 180 mm or less.
